# EUROPEAN PATENT SPECIFICATION

(11) **EP 3 854 518 B1**
(45) Date of publication and mention of the grant of the patent: **11.10.2023**
(21) Application number: 19862371.2
(22) Date of filing: 18.09.2019
(51) Int. Cl.: B23Q 5/04, B23Q 5/10, B23Q 16/04, B23B 31/177

(54) **ELECTRICAL DRIVING SYSTEM FOR MACHINE TOOL**
ELEKTRISCHES ANTRIEBSSYSTEM FÜR WERKZEUGMASCHINEN
SYSTÈME D'ENTRAÎNEMENT ÉLECTRIQUE POUR MACHINE-OUTIL

(30) Priority: 18.09.2018 KR 20180111464
(43) Date of publication of application: 28.07.2021
(73) Proprietor: Khan Workholding Co., Ltd., Changwon-si, Gyeongsangnam-do 51338 (KR)
(72) Inventor: YUN, Yongseon, Changwon-si Gyeongsangnam-do 51643 (KR); KU, Bonsaeng, Changwon-si Gyeongsangnam-do 51408 (KR)
(74) Representative: Keilitz Haines & Partner Patentanwälte PartGmbB
(86) International application number: PCT/KR2019/012095
(87) International publication number: WO 2020/060204

(56) References cited:
- WO-A1-2017/126748
- JP-A- 2001 009 607
- JP-A- 2001 009 607
- KR-A- 20160 072 569
- KR-A- 20170 121 605
- KR-B1- 101 825 184
- US-A1- 2012 263 551

## Description

### [Technical Field]

The present invention relates to a machine tool, and more particularly, a machine tool electrical driving system and an operation method thereof capable of selectively transmitting power of a motor for driving a spindle in a lathe which machines a workpiece to a rotation system including a drawbar and a spindle for clamping or unclamping the workpiece, using a clutch device.

### [Background Art]

Mobile In general, a machine tool includes a workpiece and a machining tool, and when one of the two is fixed, the other rotates to machine a shape of the workpiece, and the machine tool can be divided into a lathe and a milling machine according to a rotating unit.

The lathe is configured in such a way that the workpiece rotates in a state where the machining tool is stationary, and typically, includes a chuck for fixing the workpiece, a drawbar for driving the chuck, and a spindle for rotating the drawbar, the chuck, and the workpiece.

In a lathe of the related art, separate drive systems are required to drive a drawbar and a spindle respectively. A hydraulic system is mainly applied to the drawbar, and an electric system is mainly applied to the spindle. In a drawbar of the related art that is operated hydraulically, there are problems in that a driving unit is complicated, a chuck cannot control a force to hold a workpiece, and the efficiency is low. Accordingly, efforts have been made to develop an electrical driving system that converts a rotational force of an electric motor into thrust of the drawbar by applying a lead screw to replace the existing hydraulic system with an electric system.

In an electrical driving system of the machine tool, a spindle is selectively connected to a housing and a drive element (for example, a drive pulley) through an operation of a clutch device, and a clamping operation (clamping operation mode) of the workpiece and a machining operation (spindle operation mode) of the workpiece are generally performed.

However, in the related art, power of the motor for rotating the spindle is transmitted to the spindle through the clutch device, and thus, the power of the motor cannot be completely transmitted to the spindle, and there is a problem that power transmission efficiency may decrease.

Moreover, in the related art, when the spindle operation mode is performed on a workpiece to machine the workpiece, and then the spindle stops, a position of the spindle is not accurately known. Therefore, when components of the clutch device that engages with the spindle are linearly moved and the mode is switched to the clamping operation mode, a serration formed in the clutch device may not be correctly engaged. Conversely, when the workpiece is clamped in the clamping operation mode and then the mode is switched to the spindle operation mode, the serration is not correctly engaged. In this state, when the spindle rotates at a high speed, the rotational force of the drive element may not be accurately transmitted to the spindle through the clutch device, causing vibrations, noises, and processing defects.
JP 2001 009607 A discloses a machine tool electrical driving system comprising a housing, a hollow tubular spindle, a drawbar and a motion conversion unit. A further machine tool driving system is disclosed in WO 2017/126748 A1.

### [Technical Problem]

The present invention is to solve the above problems, and an object of the present invention is to provide a machine tool electrical driving system capable of directly transmitting power of a spindle motor to a spindle through a drive pulley to improve power transmission efficiency.

Another object of the present invention is to provide a machine tool electrical driving system capable of accurately coupling teeth of a serration of a clutch device when the position of the serration of the clutch unit is accurately detected in real time and an operation mode is switched.

### [Technical Solution]

According to an aspect of the present invention, there is provided a machine tool electrical driving system including: a housing; a hollow tubular spindle extending in a front-rear direction in the housing and rotatably installed with respect to the housing; a drive pulley fixedly installed to the spindle outside a rear portion of the spindle; a spindle motor configured to rotate the drive pulley; a chuck installed in a front end portion of the spindle and having a jaw clamping a workpiece; a drawbar installed to be linearly movable inside the spindle in a front-rear direction so that a front end portion is connected to the chuck to be linearly movable with respect to the chuck but non-rotatable relative to the chuck in the front-rear direction; a motion conversion unit configured to receive a rotational force of the drive pulley and convert the rotation force into a forward-rearward motion of the drawbar; a chuck locking unit configured to restrain or release a rotary motion of the chuck with respect to the housing; a clutch unit installed to be movable forward or rearward between a front portion of the spindle and a rear portion of the chuck and connecting the spindle to the chuck or separating the spindle from the chuck so that the spindle is rotatable relative to the chuck; and an encoder unit configured to detect a rotation position of the drive pulley.

The clutch unit may include a fixed member fixed to a rear surface of the chuck, a rotary member fixed to the front end portion of the spindle and rotatably connected to the fixed member, a fixed clutch fixed to a rear portion of the fixed member and having a front serration formed along a circumferential direction, a movable clutch installed to be movable in a front-rear direction in front of the rotary member and having a rear serration which restrains a relative rotation of the rotary member with respect to the fixed member while engaging with the front serration and is formed along the circumferential direction, and a clutch operation member configured to move the movable clutch in the front-rear direction.

The clutch operation member may include a piston installed inside a piston accommodation groove formed in the fixed member and configured to push the movable clutch rearward while moving rearward by a pneumatic pressure applied to an inside of the piston accommodation groove, a clutch spring configured to apply an elastic force to the movable clutch forward, and a piston bearing disposed between the movable clutch and the piston to rotatably support the movable clutch with respect to the piston.

The chuck locking unit may include a fixing pin installed to linearly reciprocate toward the chuck side in front of the housing, a distal end of the fixing pin being inserted into a locking groove formed on an outer peripheral surface of the fixed member or the chuck, and a pin actuator configured to linearly reciprocate the fixing pin.

A pneumatic channel extending from the piston accommodation groove to the locking groove may be formed in the fixed member, an air supply channel that communicates with the pneumatic channel when the fixing pin is inserted into the locking groove may be formed in the fixing pin, and the air supply channel may be connected to an external air supply unit to supply air to the pneumatic channel.

Moreover, a lubricant channel configured to communicate with the locking groove may be formed in the fixed member, a lubricant supply channel that communicates with the lubricant channel when the fixing pin is inserted into the locking groove may be formed in the fixing pin, and the lubricant supply channel may be connected to an external lubricant supply unit to supply a lubricant to the lubricant channel.

According to an aspect of the present invention, the motion conversion unit further includes a lead screw having an outer surface on which a screw thread is spirally formed and formed to be fixed to the drawbar, a carrier member having an inner peripheral surface on which a screw thread spirally coupled to the screw thread of the lead screw is formed and coupled to an outside of the lead screw, and a rotational force transmission unit configured to transmit a rotational force of the drive pulley to the carrier member.

The rotational force transmission unit also includes a ring-shaped drive member fixedly connected to the drive pulley and a plurality of drive pins installed in the drive member to protrude radially inward to transmit a rotational force to the carrier member, and a long hole-shaped backlash groove into which a distal end of the drive pin is inserted to move by a certain amount in a circumferential direction may be formed on an outer surface of the carrier member.

The encoder unit may include a first encoder pulley installed in a rear portion of the drive pulley, a second encoder pulley rotatably installed in the housing, an encoding power transmission belt installed to be wound around the first encoder pulley and the second encoder pulley to transmit a rotational force of the first encoder pulley to the second encoder pulley, and an encoder axially coupled to a center portion of the second encoder pulley to detect a rotation position and configured to transmit a detected position signal to a controller that controls a rotation of the spindle motor.

According to another aspect not forming part of the invention, there is provided an operation method of the machine tool electrical driving system including: the following steps, that is, (S1) a step of rotating the drive pulley, the spindle, and the clutch unit according to a position information detected by the encoder unit to arrange the clutch unit coupled to the chuck locking unit at an initial position; (S2) a step of operating the chuck locking unit to fix the chuck to the housing; (S3) a step of operating the clutch unit to separate the spindle from the chuck so that the spindle is rotatable relative to the chuck; (S4) a step of applying power to the spindle motor and rotating the drive pulley, the spindle, the motion conversion unit in an unclamping direction so that the jaw unclamps the workpiece; (S5) a step of applying power to the spindle motor and rotating the drive pulley, the spindle, the motion conversion unit in a clamping direction so that the jaw clamps the workpiece; (S6) a step of rotating the drive pulley, the spindle, the motion conversion unit by a certain amount according to the position information detected by the encoder unit and adjusting a position of the clutch unit so that coupling positions of serrations of the clutch unit are arranged; (S7) a step of operating the clutch unit oppositely to the step (S3) to restrain the spindle with respect to the chuck; (S8) a step of operating the chuck locking unit oppositely to the step to release the fixed state of the chuck; and (S9) a step of applying power to the spindle motor and machining the workpiece while rotating the drive pulley and the spindle at a predetermined speed in one direction.

### [Advantageous Effects]

According to the present invention, the drive pulley that is connected to the spindle motor and receives the rotation force is fixed to the outer surface of the spindle, and thus, the rotational force of the drive pulley can be directly transmitted to the spindle. Therefore, it is possible to increase power transmission efficiency.

Moreover, the clutch unit is disposed in front of the spindle, and thus, the clutch unit and the spindle can be easily detached or attached as one module.

Moreover, positions of the drive pulley, the spindle, and the clutch unit coupled thereto are accurately detected by the encoder unit, and based on detected position information, when a spindle operation mode is switched to a clamping operation mode and the clamping operation mode is switched to the spindle operation mode, a position of the serration of the clutch unit can be accurately arranged, the serrations configured in the clutch unit can be accurately engaged with each other always, and a correct drive control can be performed in each operation mode.

### [Description of Drawings]

FIG. 1 is a cross-sectional view illustrating the overall configuration of a machine tool electrical driving system according to one embodiment of the present invention.
FIG. 2 is a cut-away perspective view illustrating a state where the electrical driving system illustrated in FIG. 1 is longitudinally cut along a central axis.
FIG. 3 is an exploded perspective view illustrating components configured in front of the electrical driving system illustrated in FIG. 1.
FIGS. 4a and 4b are enlarged cross-sectional views of a portion of the electrical driving system illustrated in FIG. 1, FIG. 4a illustrates a clamping operation mode, and FIG. 4b illustrate a spindle operation mode.
FIG. 5 is a front view of a portion illustrated in FIGS. 4a and 4b.
FIG. 6 is an enlarged view of a portion A illustrated in FIG. 4a.
FIG. 7 is a cross-sectional view taken along line K-K of FIG. 6.
FIG. 8 is a cross-sectional view taken along line X-X of FIG. 6.
FIG. 9 is an enlarged cross-sectional view illustrating another portion of the electrical driving system illustrated in FIG. 1.
FIG. 10 is a cross-sectional view taken along line Z-Z of FIG. 9.

Embodiments described in the present specification and configurations illustrated in the drawings are only preferred examples of the disclosed invention.

Hereinafter, with reference to the accompanying drawings, a machine tool electrical driving system and an operation method thereof will be described in detail according to the following embodiments. In the drawings, the same reference numerals denote the same components.

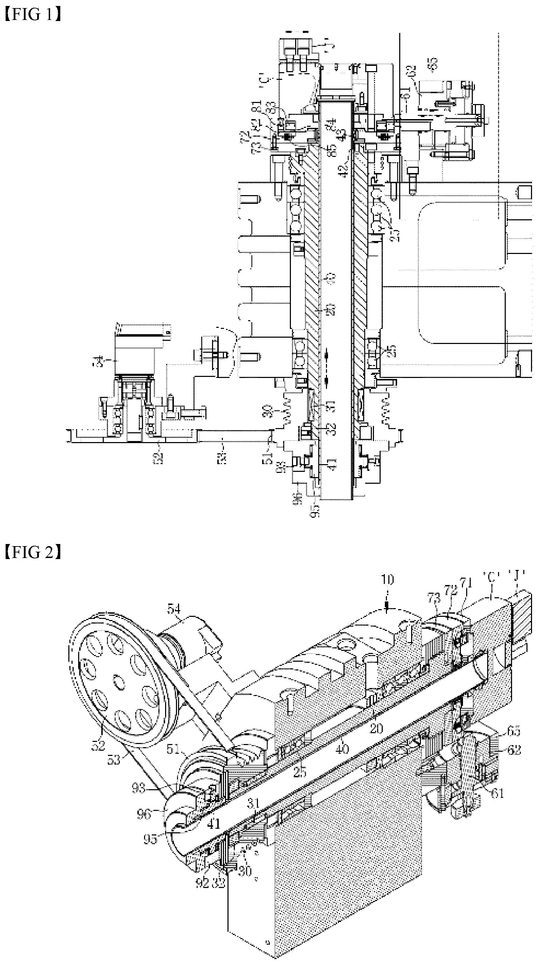

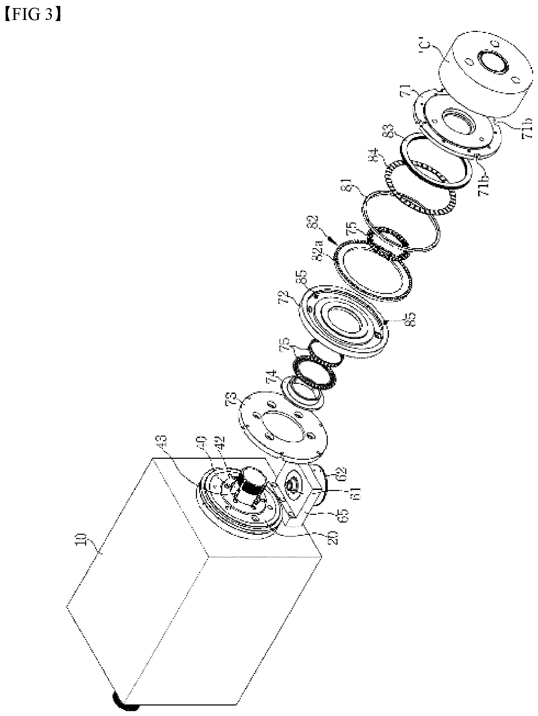

First, referring to FIGS. 1 to 5, a machine tool electrical driving system of the present invention includes a housing 10 that is fixedly installed in a main body of a machine tool, a hollow tubular spindle 20 that is rotatably installed with respect to the housing 10, a drive pulley 30 that is fixedly installed to the spindle 20 outside a rear portion of the spindle 20, a spindle motor (not illustrated) that rotates the drive pulley 30, a chuck C that is installed in a front end portion of the spindle 20 and has a jaw J clamping a workpiece, a drawbar 40 that is installed to be linearly movable inside the spindle 20 in a front-rear direction so that a front end portion is connected to the jaw J, a draw key 43 a draw key groove 42 that connect the drawbar 40 so that the drawbar 40 is linearly movable with respect to the chuck C but non-rotatable relative to the chuck C, a chuck locking unit that restrains or releases a rotary motion of the chuck C with respect to the housing, a clutch unit that is installed to be movable forward or rearward between a front portion of the spindle 20 and a rear portion of the chuck C and restrains the spindle 20 with respect to the chuck C or separates the spindle 20 from the chuck C so that the spindle 20 is rotatable relative to the chuck C, a motion conversion unit that receives a rotational force of the drive pulley 30 and converts the rotation force into a forward-rearward motion of the drawbar 40, and an encoder unit that detects a rotation position of the drive pulley 30.

Here, the motion conversion unit includes a lead screw 41 that has an outer surface on which a screw thread is spirally formed and is fixedly formed in the drawbar 40, a carrier member 95 that has an inner peripheral surface on which a screw thread 95a spirally coupled to the screw thread of the lead screw 41 is formed and is coupled to an outside of the lead screw 41, and a rotational force transmission unit that a rotational force of the drive pulley 30 to the carrier member 95.

The housing 10 is formed in an empty tubular shape and is fixedly installed on the main body of the machine tool. A chuck C for machining a workpiece is provided outside a front portion of the housing 10, and a jaw J for clamping the workpiece is installed in the chuck C so as to be movable in the radial direction. The jaw J is connected to a front end portion of the drawbar 40 through a link member (not illustrated) and clamps or unclamps the workpiece while moving in a radial direction by a forward-rearward linear motion of the drawbar 40. In the present embodiment, a case where the jaw C is moved inward radially by a rearward movement of the drawbar 40 to clamp the workpiece is described. However, conversely, the jaw J may be moved inward radially by a forward movement of the drawbar 40 to clamp the workpiece, according to a structure of the chuck C.

The spindle 20 is in the form of an elongated cylindrical hollow tube in the front direction, and is rotatably installed about an axis along an axial direction (front-rear direction) in an inner space of the housing 10. A plurality of spindle bearings 25 rotatably supporting the spindle 20 with respect to the housing 10 are installed between a front outer surface and a rear outer surface of the spindle 20 and a front end portion and a rear end portion of the housing 10.

The spindle motor (not illustrated) is installed outside the housing 10 and is connected to the drive pulley 30 through a power transmission member such as a drive belt (not illustrated) to transmit a rotational force to the drive pulley 30.

The spindle motor (not illustrated) may include a spindle encoder (not illustrated) for detecting amount of rotation and position of the spindle 20. The spindle motor is electrically connected to a controller and is operated by receiving a control signal from the controller.

The drive pulley 30 is fixedly installed on the rear outer surface of the spindle 20, receives power of the spindle motor (not illustrated), and rotates together with the spindle 20. Between an inner peripheral surface of the drive pulley 30 and the spindle 20, a fixing key 31 that restrains the drive pulley 30 so that the drive pulley 30 cannot rotate relative to the spindle 20 and a lock nut 32 that is formed on a rear end of the spindle 20 behind of the drive pulley 30 to prevent separation of the drive pulley 30 and the fixing key 31 are spirally coupled with each other.

The drawbar 40 is installed to be linearly movable forward or rearward in front-rear direction inside a hollow option of the spindle 20, that is, an axial direction of the spindle 20 but non-rotatable with respect to the chuck C. To this end, the plurality of drawbar key grooves 42 are formed to extend in the front-rear direction on the outer peripheral surface of the front portion of the drawbar 40, the drawbar key 43 to be inserted into the drawbar key groove 42 is fixed to an inner peripheral portion of the chuck C, precisely, a coupling bush 74 that is a component of the clutch unit fixed to the chuck C. Accordingly, the drawbar 40 can move in the axial direction with respect to the chuck C and the spindle 20 but cannot rotate with respect to the chuck C.

The lead screw 41 for moving the drawbar 40 forward or rearward is formed on the outer surface of the rear end portion of the drawbar 40 in a spiral shape in the front-rear direction. The lead screw 41 may be integrally formed with the drawbar 40, but differently, the lead screw 41 may be manufactured as a separate body with the drawbar 40 and then fixedly coupled to the rear end of the drawbar 40.

Referring to FIGS. 2 and 4a to 8, the clutch unit is configured to restrain the spindle 20 with respect to the chuck C or separate the spindle 20 so that the spindle 20 can rotate relative to the chuck C. In this embodiment, the clutch unit includes a fixed member 71 that is fixed to a rear surface of the chuck C, a rotary member 72 that is fixed to the front end portion of the spindle 20 and rotatably connected to the fixed member 71, a fixed clutch that is fixed to a rear portion of the fixed member 71 and has a front serration 81a formed along a circumferential direction, a movable clutch 82 that is installed to be movable in the front-rear direction in front of the rotary member 72 and has a rear serration 82a which restrains a relative rotation of the rotary member 72 with respect to the fixed member 71 while engaging with the front serration 81a and is formed along the circumferential direction, and a clutch operation member that linearly moves the movable clutch 82 in the front-rear direction.

The fixed member 71 is installed to be fixed to a rear surface of the chuck C by a fastening unit such as a bolt. The rotary member 72 is fixed to the front end portion of the spindle 20 behind the fixed member 71, a chuck adapter 73 is fixed to a front end portion of the spindle 20 by a fastening unit such as a bolt in order to couple the rotary member 72 to the spindle 20, and the rotary member 72 is coupled to the chuck adapter 73 by a fastening unit such as a bolt. Moreover, the coupling bush 74 and a bearing 75 are installed between the fixed member 71 and the rotary member 72 so that the rotary member 72 is connected to be rotatable relative to the fixed member 71. The coupling bush 74 has a ring shape having an L-shaped cross section and is fitted between the outer surface of the front end portion of the drawbar 40 and the inner peripheral surface of the rotary member 72, and the coupling bush 74 and the rotary member. Moreover, the bearing 75 is installed between the coupling bush 74 and the rotary member 72 and between the rotary member 72 and the fixed member 71 so that the rotary member 72 is restrained in the axial direction and can rotate relative to the fixed member 71.

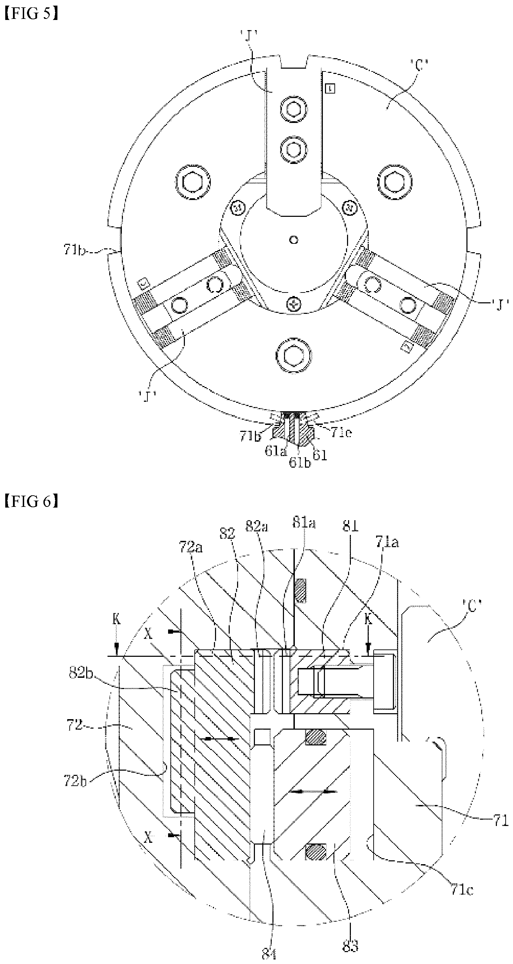

As illustrated in Fig. 6, the fixed clutch 81 is fixedly installed inside a fixed clutch accommodation groove 71a formed in the rear surface of the fixed member 71 in a ring shape. The fixed clutch 81 may be fixedly coupled after being manufactured as a separate body with the fixed member 71, but differently, the fixed clutch 81 and the fixed member 71 may be integrally formed.

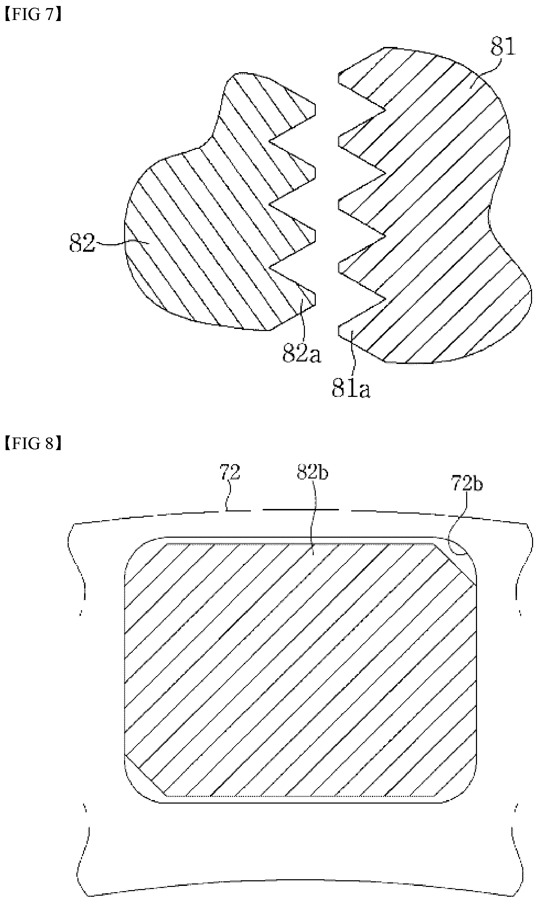

The movable clutch 82 is installed inside a movable clutch receiving groove 72a formed on the front surface of the rotary member 72 so as to be movable in the front-rear direction but non-rotatable relatively. To this end, as illustrated in FIGS. 6 and 8, a plurality of guide blocks 82b having a polygonal cross section such as a quadrangle are formed to protrude rearward on the rear surface of the movable clutch 82, and a rectangular guide groove 72b into which the guide block 82b is inserted is formed on the rear surface of the movable clutch accommodating groove 72a.

In this embodiment, the clutch operation member includes a piston 83 that is installed inside a piston accommodation groove 71c formed in the fixed member 71 and pushes the movable clutch 82 rearward while moving rearward by a pneumatic pressure applied to an inside of the piston accommodation groove 71c, a plurality of clutch springs 85 that is disposed between the rotary member 72 and he movable clutch 82 to apply an elastic force to the movable clutch 82 forward, and a piston bearing 84 that is disposed between the movable clutch 82 and the piston 83 to rotatably support the movable clutch 82 with respect to the piston 83. The piston bearing 84 serves to minimize the frictional force between the movable clutch 82 and the piston 83 when the rotary member 72 rotates.

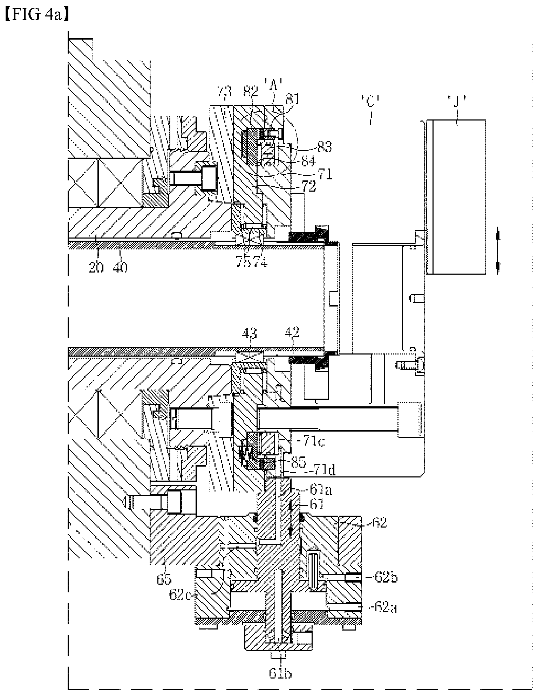

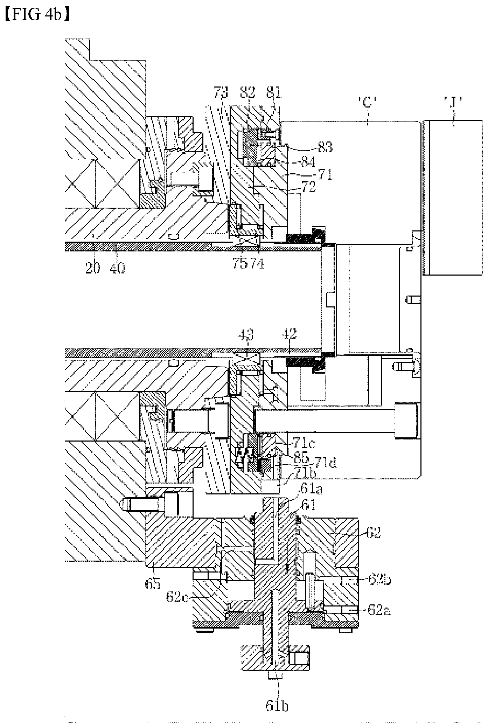

Referring to FIGS. 4a, 4b, and 5, the chuck locking unit includes a fixing pin 61 that is installed to linearly reciprocate toward the chuck C side in front of the housing 10 and fixes the chuck C with respect to the housing 10, and a pin actuator 62 that linearly reciprocates the fixing pin 61.

The fixing pin 61 is installed in a support block 65 fixedly installed on the front end portion of the housing 10 so as to be moveable forward or rearward in the radial direction of the chuck C. Accordingly, a distal end of the fixing pin 61 fixes the fixed member 71 and the chuck C with respect to the housing 10 while being inserted into a locking groove 71b formed on the outer peripheral surface of the fixed member 71.

The pin actuator 62 includes a first port 62a which is formed to be fixed to the support block 65 and to which a pneumatic pressure is applied to move the fixing pin 61 radially inward, and a second port 62b to which a pneumatic pressure is applied to move the fixing pin 61 radially outward.

Meanwhile, a pneumatic channel 71d extending from the piston accommodation groove 71c to the locking groove 71b is formed in the fixed member 71, air supply channel 61c and 61a that communicate with the pneumatic channel 71d when the fixing pin 61 is inserted into the locking groove 71b are formed in the pin actuator 62 and the fixing pin 61, and a distal end of the air supply channel 62c formed in the pin actuator 62 is connected to an external air supply unit (not illustrated) so as to supply air to the pneumatic channel 71d and operate the piston 83. The air supply channel 61a of the fixing pin 61 communicates with the air supply channel 62c of the pin actuator 62 when the fixing pin 61 moves radially inward and is inserted into the locking groove 71b of the fixed member 71 (see FIG. 4a), and the air supply is stopped while the fixing pin 61 deviates from the air supply channel 62c of the pin actuator 62 when the fixing pin 61 moves radially outward and deviates to the outside of the locking groove 71b of the fixed member 71 (see FIG. 4b).

Moreover, a lubricant channel 71e that communicates with the locking groove 71b is formed in the fixed member 71, a lubricant supply channel 61b that communicates with the lubricant channel 71e when the fixing pin 61 is inserted into the locking groove 71b is formed in the fixing pin 61, and the lubricant supply channel 61b is connected to an external lubricant supply unit to supply a lubricant a component requiring lubrication, for example, the bearing 75 and the movable clutch 82, through the lubricant channel 71e.

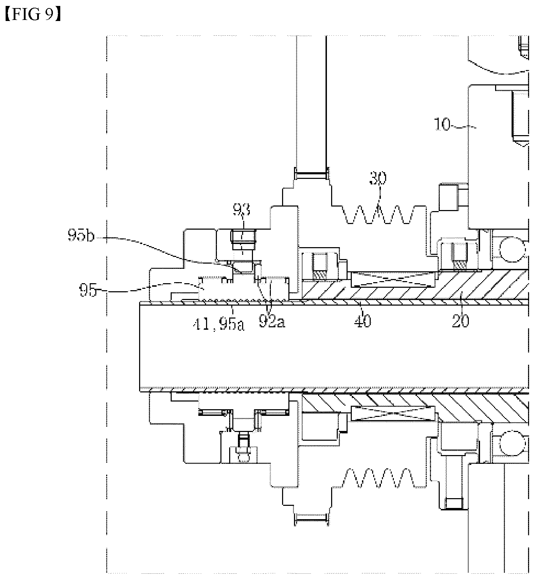

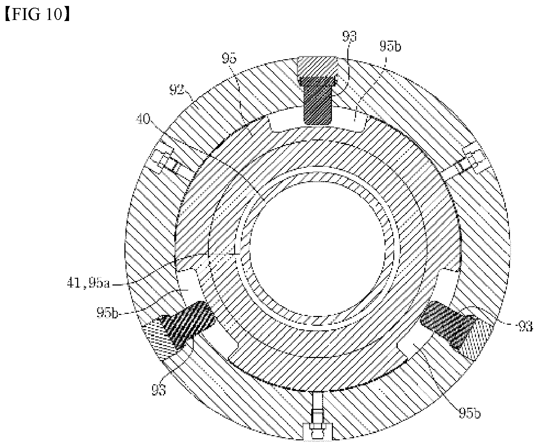

Referring to FIGS. 1 to 3, 9, and 10, the rotational force transmission unit includes a ring-shaped drive member 92 that is fixedly connected to the drive pulley 30, and a plurality of drive pins 93 that are installed to protrude radially inward of the drive member 92 and connected to an inside of a backlash groove 95b formed on the outer surface of the carrier member 95.

The drive member 92 is formed in a circular ring shape, a front end portion of the drive member 92 is fixed coupled to the rear end portion of the drive pulley 30, and thus, the drive member 92 rotates together with the drive pulley 30. A bearing 92a is installed between the drive member 92 and the carrier member 95.

The carrier member 95 is formed in a cylindrical shape having opened front portion and rear portion, and a plurality of (three in this embodiment) the backlash grooves 95b into which the distal end of the drive pin 93 is inserted are formed on an outer peripheral surface of the carrier member 95 at equal intervals. The backlash groove 95b is formed in a long hole shape extending in the circumferential direction of the carrier member 95, and a space that allows a relative movement of the drive pin 93 is formed between both end portions of the drive pin 93 and the backlash groove 95b. As the drive member 92 rotates, the drive pin 93 hits any one of both end portions of the backlash grooves 95b to transmit a rotational force to the carrier member 95.

Moreover, the screw thread 95a spirally coupled to the lead screw 41 formed on the rear end of the drawbar 40 is formed on the inner peripheral surface of the carrier member 95. Accordingly, when the carrier member 95 rotates, the lead screw 41 and the drawbar 40 linearly move in the front-rear direction by a reaction between the screw thread 95a of the carrier member 95 and the lead screw 41. This is because, as described above, the drawbar 40 is installed to be movable in the axial direction with respect to the chuck C inside the spindle 20 but non-rotatable relatively.

Moreover, a ring-shaped fixed cover 96 is detachably installed in a rear end portion of the drive member 92 by a fastening unit such as a bolt.

Meanwhile, an encoder unit for accurately detecting a rotation position of the drive pulley 30 in real time is connected to the drive pulley 30. The encoder unit includes a first encoder pulley 51 that is installed in a rear portion of the drive pulley 30, a second encoder pulley 52 that is rotatably installed behind the housing 10, an encoding power transmission belt 53 that is installed to be wound around the first encoder pulley 51 and the second encoder pulley 52 to transmit a rotational force of the first encoder pulley 51 to the second encoder pulley 52, and an encoder 54 axially coupled to a center portion of the second encoder pulley 52 to detect a rotation position. The encoder 54 is electrically connected to the controller (not illustrated) that controls a rotation of the spindle motor (not illustrated) and transmits a signal on detected position information to the controller.

Therefore, when the drive pulley 30 rotates together with the spindle 20, the first encoder pulley 51 rotates together with the drive pulley 30, a rotational force of the first encoder pulley 51 is transmitted to the encoder 54 through the encoding power transmission belt 53, and the controller (not illustrated) can detect rotation positions of the drive pulley 30 and the spindle 20.

An operation method of the electrical driving system having the above configuration includes the following steps.
(S1) a step of rotating the drive pulley 30, the spindle 20, and the fixed member 71 of the clutch unit according to a position information detected by the encoder unit to arrange the fixed member 71 at an initial position
(S2) a step of operating the chuck locking unit to fix the chuck C to the housing 10
(S3) a step of operating the clutch unit to separate the spindle 20 from the chuck C so that the spindle 20 is rotatable relative to the chuck C
(S4) a step of applying power to the spindle motor and rotating the drive pulley 30, the spindle 20, the rotational force transmission unit, the carrier member 95 in a reverse direction (unclamping direction) so that the jaw J unclamps the workpiece
(S5) a step of applying power to the spindle motor and rotating the drive pulley 30, the spindle 20, the rotational force transmission unit, the carrier member 95 in a forward direction (clamping direction) so that the jaw J clamps the workpiece
(S6) a step of rotating the drive pulley 30, the spindle 20, the rotational force transmission unit in the reverse direction (unclamping direction) by a certain amount according to the position information detected by the encoder unit and adjusting a position of the clutch unit so that coupling positions of serrations of the clutch unit are arranged
(S7) a step of operating the clutch unit oppositely to the step (S3) to restrain the spindle 20 with respect to the chuck C
(S8) a step of operating the chuck locking unit oppositely to the step (S2) to release the fixed state of the chuck C
(S9) a step of applying power to the spindle motor and machining the workpiece while rotating the spindle 20 at a predetermined speed in one direction

Hereinafter, the above-described operation method will be described in more detail.

In a clamping operation mode in which the jaw J of the machine tool clamp the workpiece, the fixed member 71 and the chuck C are fixed to the housing 10 by the chuck locking unit, a rotation of the drawbar 40 of which a front end portion is connected to the chuck C is restrained, and the movable clutch 82 of the clutch unit moves rearward and is separated from the fixed member 71 (see FIG. 4a). Moreover, in a spindle operation mode in which the spindle 20 rotates at a high speed to machine the workpiece in a state where the jaw J of the machine tool clamps the workpiece, the coupling between the fixed member 71 and the chuck locking unit is released and the rotations of the fixed member 71 and the chuck C become free to rotate, and the movable clutch 82 moves forward and is coupled to the fixed clutch 81 (see FIG. 4b).

As described above, when the spindle operation mode is switched to the clamping operation mode, the chuck locking unit should fix the fixed member 71 to restrain the rotary motion of the chuck C. Therefore, when the clamping operation mode starts, the controller (not illustrated) rotates the drive pulley 30 by a certain amount based on the position information of the drive pulley 30 and the clutch unit transmitted through the encoder 54 of the encoder unit and aligns a position of the fixed member 71 at the initial original position. In this case, since the rear serration 82a of the movable clutch 82 engages with the front serration 71a of the fixed member 71, the rotary motion of the drive pulley 30 is transmitted to the fixed member 71 and the chuck C through the movable clutch 82 and the fixed clutch 81 so that the fixed member 71 and the chuck rotate.

By this alignment operation, the locking groove 71b of the fixed member 71 and the fixing pin 61 of the chuck locking unit are accurately aligned (step S1).

When the position alignment operation by the encoder unit is completed immediately before the operation mode is switched to the clamping operation mode, the clamping operation mode for the clamping operation of the workpiece starts. In the clamping operation mode, as shown in FIG. 4a, a pneumatic pressure is applied through the first port 62a of the pin actuator 62 of the chuck locking unit, the fixing pin 61 moves radially inward of the chuck C, and the chuck C is fixed to the housing 10 while the distal end of the fixing pin 61 is inserted into the locking groove 71b of the fixed member 71 (step S2).

In this state, air is supplied through the air supply channels 62c and 61a of the pin actuator 62 and the fixing pin 61, and thus, the piston 83 of the clutch unit moves rearward. Accordingly, the movable clutch 82 moves rearward, the front serration 81a of the fixed clutch 81 and the rear serration 82a of the movable clutch (82) are separated from each other, a restraint state between the rotary member 72 and the fixed member 71 is released, and the rotary member 72 can rotate with respect to the fixed member 71 (step S3).

Subsequently, when power is applied to the spindle motor and the drive pulley 30 and the spindle 20 rotate by a certain amount in the reverse direction (unclamping direction) (step S4), the drive member 92 coupled to the rear of the drive pulley 30, the drive pin 93, and the carrier member 95 rotate together in the reverse direction. In this case, the drive pin 93 transmits a rotational force to the carrier member 95 while hitting one end of the backlash groove 95b and.

In this case, as the carrier member 95 rotates in a state where the drawbar 40 is restrained as not to rotate relative to the chuck C by the drawbar key groove 42 and the drawbar key 43, a forward thrust is generated in the lead screw 41, and thus, the drawbar 40 moves forward by a certain distance. As the drawbar 40 linearly moves forward with respect to the spindle 20, the jaw J is opened and the workpiece is unclamped (step S4).

Subsequently, when the spindle motor (not illustrated) operates in the forward direction (clamping direction) opposite to the previous direction, the drive pulley 30 and the spindle 20 rotate by a certain amount in the direction opposite to the previous direction, the carrier member 95 is rotated in the direction opposite to the previous direction, a rearward thrust is generated in the lead screw 41, and thus, the drawbar 40 moves rearward by a certain distance. Accordingly, the jaw J connected to the drawbar 40 is closed radially inward and firmly clamps the workpiece (step S5). In this case, since the lead screw 41 at the rear end of the drawbar 40 is spirally coupled to the carrier member 95 and is tightly engaged with the carrier member 95, the clamping force is maintained by a self-locking action of the lead screw 41 even if the spindle motor is not operated.

Subsequently, the controller receives a position signal from the encoder 54, the spindle motor is operated in the reverse direction so that teeth of the front serration 81a of the fixed clutch 81 and teeth of the rear serration 82a of the movable clutch 82 are accurately engaged with each other, and thus, the drive pulley 30, the drive member 92, and the drive pin 93 rotate by a certain amount in the direction opposite to the previous direction. In this case, the drive pin 93 can idle within the backlash groove 95b of the carrier member 95 by a certain distance, the carrier member 95 does not rotate by the drive pin 93, and the chuck adapter 73 and the rotary member 72 rotates with respect to the fixed member 71 to adjust the position of the movable clutch 82 (step S6). If the rear serration 82a of the movable clutch 82 is not correctly engaged with the front serration 81a of the fixed clutch 81, the rotational force is not transmitted accurately to the chuck C when machining the workpiece by rotating the spindle 20 at high speed, and machining failure may occur. However, in the present invention, the carrier member 95 has the backlash groove 95b with a width larger than a diameter of the drive pin 93. Accordingly, the rotary member 72 can rotate by a certain degree while the carrier member 95 is not rotated, and thus, it is possible to finely adjust the movable clutch 82.

When the position of the movable clutch 82 is adjusted in this way, the application of pneumatic pressure through the air supply channels 62c and 61a of the pin actuator 62 and the fixing pin 61 is stopped, and an external force applied rearward to the piston 83 of the clutch unit is removed. Accordingly, as illustrated in FIG. 4b, the movable clutch 82 and the piston 83 are moved forward by the elastic force of the clutch spring 85, the teeth of the rear serration 82a of the movable clutch 82 and the teeth of the front serration 81a of the fixed clutch 81 are accurately engaged with each other, and thus, the rotary member 72 and the fixed member 71 are firmly constrained to each other (step S7).

Subsequently, a pneumatic pressure is applied through the second port 62b of the pin actuator 62, and the fixing pin 61 moves radially outward to release the fixed state of the fixed member 71 and the chuck C (step S8).

In this state, when power is applied to the spindle motor (not illustrated) to rotate the drive pulley 30 and the spindle 20 at a high speed, the spindle 20, the drive member 92, and the carrier member 95 rotate together with the drive pulley 30, and at the same time, the rotary member 72 and the fixed member 71 in front of the spindle 20, the chuck C, and the drawbar 40 rotate together, and thus, the workpiece is machined (step S9).

When the machining of the workpiece is completed, the spindle 20 is stopped, and the above-described step S1 is repeated again.

Meanwhile, in the case of the clutch unit configured in the electrical driving system, when the clamping operation mode is switched to a rotational operation mode, in order to accurately engage the serrations 81a and 82a formed in the fixed clutch 81 and the movable clutch 82, the rotary member 72 may be rotated in a clamping reverse direction to be engaged, or may be rotated further in the clamping forward direction to be engaged. This is because rotating in the clamping reverse direction (unclamping direction) may cause a decrease in the clamping force, but further rotating in the forward direction (the number of serration teeth is further increased so that the serrations are engaged within about 0.5° to 2°) causes an increase in the clamping force. However, in the case of the electrical driving system, the clamping force is accurately controlled. Accordingly, it is not good that an initially set clamping force is changed due to the rotation of the rotational force transmission unit and the rotary member 72 in the reverse direction or the forward direction. To solve this problem, in the present invention, a backlash structure is formed in the rotational force transmission unit, that is, the backlash groove 95b is formed in the carrier member 95 constituting the rotational force transmission unit, the drive member 92 that receives the driving force from the spindle motor and is rotated is inserted into the backlash groove 95b, and the drive pin 93 to which the rotational force is transmitted is configured. Accordingly, it is possible to prevent the clamping force from being changed when the engagement of the serrations of the clutch unit is adjusted.

### [Industrial Applicability]

The present invention can be applied to a machine tool that machines a workpiece.

## Claims

1. A machine tool electrical driving system comprising:
a housing (10);
a hollow tubular spindle (20) extending in a front-rear direction in the housing (10) and rotatably installed with respect to the housing (10);
a drive pulley (30) fixedly installed to the spindle (20) outside a rear portion of the spindle (20);
a spindle motor configured to rotate the drive pulley (30);
a chuck (C) installed in a front end portion of the spindle (20) and having a jaw (J) clamping a workpiece;
a drawbar (40) installed to be linearly movable inside the spindle (20) in a front-rear direction so that a front end portion is connected to the chuck (C) to be linearly movable with respect to the chuck (C) but non-rotatable relative to the chuck (C) in the front-rear direction;
a motion conversion unit configured to receive a rotational force of the drive pulley (30) and convert the rotation force into a forward-rearward motion of the drawbar (40);
a chuck locking unit configured to restrain or release a rotary motion of the chuck (C) with respect to the housing (10);
a clutch unit installed to be movable forward or rearward between a front portion of the spindle (20) and a rear portion of the chuck (C) and connecting the spindle (20) to the chuck (C) or separating the spindle (20) from the chuck (C) so that the spindle (20) is rotatable relative to the chuck (C); and
an encoder unit configured to detect a rotation position of the drive pulley (30) **characterized in that**
the motion conversion unit includes:
a lead screw (41) having an outer surface on which a screw thread is spirally formed and formed to be fixed to the drawbar (40),
a carrier member (95) having an inner peripheral surface on which a screw thread (95a) spirally coupled to the screw thread of the lead screw (41) is formed and coupled to an outside of the lead screw (41), and
a rotational force transmission unit configured to transmit a rotational force of the drive pulley (30) to the carrier member (95), wherein the rotational force transmission unit includes a ring-shaped drive member (92) fixedly connected to the drive pulley (30) and a plurality of drive pins (93) installed in the drive member (92) to protrude radially inward to transmit a rotational force to the carrier member (95), and a long hole-shaped backlash groove into which a distal end of the drive pin (93) is inserted to move by a certain amount in a circumferential direction is formed on an outer surface of the carrier member (95).

2. The machine tool electrical driving system of claim 1, the clutch unit includes
a fixed member (71) fixed to a rear surface of the chuck (C),
a rotary member (72) fixed to the front end portion of the spindle (20) and rotatably connected to the fixed member (71),
a fixed clutch fixed to a rear portion of the fixed member (71) and having a front serration (81a) formed along a circumferential direction,
a movable clutch (82) installed to be movable in a front-rear direction in front of the rotary member (72) and having a rear serration (82a) which restrains a relative rotation of the rotary member (72) with respect to the fixed member (71) while engaging with the front serration (81a) and is formed along the circumferential direction, and
a clutch operation member configured to move the movable clutch (82) in the front-rear direction.

3. The machine tool electrical driving system of claim 2, wherein the clutch operation member includes a piston (83) installed inside a piston accommodation groove (71c) formed in the fixed member (71) and configured to push the movable clutch (82) rearward while moving rearward by a pneumatic pressure applied to an inside of the piston accommodation groove (71c), a clutch spring (85) configured to apply an elastic force to the movable clutch (82) forward, and a piston bearing (84) disposed between the movable clutch (82) and the piston (83) to rotatably support the movable clutch (82) with respect to the piston (83).

4. The machine tool electrical driving system of claim 3, wherein the chuck locking unit includes
a fixing pin (61) installed to linearly reciprocate toward the chuck (C) side in front of the housing (10), a distal end of the fixing pin (61) being inserted into a locking groove (71b) formed on an outer peripheral surface of the fixed member (71) or the chuck (C), and
a pin actuator (62) configured to linearly reciprocate the fixing pin (61).

5. The machine tool electrical driving system of claim 4, wherein a pneumatic channel (71d) extending from the piston accommodation groove (71c) to the locking groove (71b) is formed in the fixed member (71), an air supply channel (61a) that communicates with the pneumatic channel (71d) when the fixing pin (61) is inserted into the locking groove (71b) is formed in the fixing pin (61), and the air supply channel (61a) is connected to an external air supply unit to supply air to the pneumatic channel (71d).

6. The machine tool electrical driving system of claim 4, wherein a lubricant channel (71e) configured to communicate with the locking groove (71b) is formed in the fixed member (71), a lubricant supply channel (61b) that communicates with the lubricant channel (71e) when the fixing pin (61) is inserted into the locking groove (71b) is formed in the fixing pin (61), and the lubricant supply channel (61b) is connected to an external lubricant supply unit to supply a lubricant to the lubricant channel (71e).

7. The machine tool electrical driving system of claim 1, wherein the encoder unit includes
a first encoder pulley (51) installed in a rear portion of the drive pulley (30),
a second encoder pulley (52) rotatably installed in the housing (10),
an encoding power transmission belt (53) installed to be wound around the first encoder pulley (51) and the second encoder pulley (52) to transmit a rotational force of the first encoder pulley (51) to the second encoder pulley (52), and
an encoder (54) axially coupled to a center portion of the second encoder pulley (52) to detect a rotation position and configured to transmit a detected position signal to a controller that controls a rotation of the spindle motor.

## Patentansprüche

1. Elektrisches Antriebssystem für eine Werkzeugmaschine, umfassend:
ein Gehäuse (10);
eine hohle rohrförmige Spindel (20), die sich in einer Vorwärts-Rückwärts-Richtung in dem Gehäuse (10) erstreckt und drehbar in Bezug auf das Gehäuse (10) installiert ist;
eine Antriebsriemenscheibe (30), die fest an der Spindel (20) außerhalb eines hinteren Abschnitts der Spindel (20) installiert ist;
einen Spindelmotor, der konfiguriert ist, um die Antriebsriemenscheibe (30) zu drehen;
ein Spannfutter (C), das in einem vorderen Endabschnitt der Spindel (20) installiert ist und eine Backe (J) aufweist, die ein Werkstück klemmt;
eine Zugstange (40), die so installiert ist, dass sie innerhalb der Spindel (20) in einer Vorwärts-Rückwärts-Richtung linear beweglich ist, so dass ein vorderer Endabschnitt mit dem Spannfutter (C) verbunden ist, um in Bezug auf das Spannfutter (C) linear beweglich zu sein, aber nicht-drehbar in Bezug auf das Spannfutter (C) in der Vorwärts-Rückwärts-Richtung;
eine Bewegungsumwandlungseinheit, die konfiguriert ist, um eine Drehkraft der Antriebsriemenscheibe (30) aufzunehmen und die Rotationskraft in eine Vorwärts-Rückwärts-Bewegung der Zugstange (40) umzuwandeln;
eine Spannfutterverriegelungseinheit, die konfiguriert ist, um eine Drehbewegung des Spannfutters (C) in Bezug auf das Gehäuse (10) zurückzuhalten oder freizugeben;
eine Kupplungseinheit, die so installiert ist, dass sie zwischen einem vorderen Abschnitt der Spindel (20) und einem hinteren Abschnitt des Spannfutters (C) vorwärts oder rückwärts bewegbar ist und die Spindel (20) mit dem Spannfutter (C) verbindet oder die Spindel (20) von dem Spannfutter (C) trennt, so dass die Spindel (20) relativ zum Spannfutter (C) drehbar ist; und
eine Codiereinheit, die konfiguriert ist, um eine Drehposition der Antriebsriemenscheibe (30) zu erfassen
**dadurch gekennzeichnet, dass**
die Bewegungsumwandlungseinheit umfasst:
eine Leitspindel (41) mit einer Außenfläche, auf der ein Schraubengewinde spiralförmig ausgebildet und ausgebildet ist, um an der Zugstange (40) befestigt zu werden,
ein Trägerelement (95) mit einer inneren Umfangsfläche, auf der ein Schraubengewinde (95a), das spiralförmig mit dem Schraubengewinde der Leitspindel (41) gekoppelt ist, gebildet und mit einer Außenseite der Leitspindel (41) gekoppelt ist, und
eine Rotationskraftübertragungseinheit, die konfiguriert ist, um eine Drehkraft der Antriebsriemenscheibe (30) auf das Trägerelement (95) zu übertragen, wobei die Drehkraftübertragungseinheit ein ringförmiges Antriebselement (92), das fest mit der Antriebsriemenscheibe (30) verbunden ist, und eine Vielzahl von Antriebsstiften (93) umfasst, die in dem Antriebselement (92) installiert sind, um radial nach innen vorzustehen, um eine Drehkraft auf das Trägerelement (95) zu übertragen, wobei eine langlochförmige Nut, in die ein distales Ende des Antriebsstifts (93) eingesetzt ist, um sich um einen bestimmten Betrag in einer Umfangsrichtung zu bewegen, an einer Außenfläche des Trägerelements (95) ausgebildet ist.

2. Elektrisches Antriebssystem für eine Werkzeugmaschine nach Anspruch 1, wobei die Kupplungseinheit umfasst
ein festes Element (71), das an einer hinteren Oberfläche des Spannfutters (C) befestigt ist,
ein Drehelement (72), das an dem vorderen Endabschnitt der Spindel (20) befestigt ist und drehbar mit dem festen Element (71) verbunden ist,
eine feste Kupplung, die an einem hinteren Abschnitt des festen Elements (71) befestigt ist und eine vordere Verzahnung (81a) aufweist, die entlang einer Umfangsrichtung ausgebildet ist,
eine bewegliche Kupplung (82), die installiert ist, um in einer Vorwärts-Rückwärts-Richtung vor dem Drehelement (72) beweglich zu sein, und eine hintere Verzahnung (82a) aufweist, die eine relative Drehung des Drehelements (72) in Bezug auf das feststehende Element (71) zurückhält, während sie mit der vorderen Verzahnung (81a) in Eingriff steht und entlang der Umfangsrichtung ausgebildet ist, und
ein Kupplungsbetätigungselement, das konfiguriert ist, um die bewegliche Kupplung (82) in der Vorwärts-Rückwärts-Richtung zu bewegen.

3. Elektrisches Antriebssystem für eine Werkzeugmaschine nach Anspruch 2, wobei das Kupplungsbetätigungselement einen Kolben (83) umfasst, der in einer Kolbenaufnahmenut (71c) installiert ist, die in dem festen Element (71) ausgebildet ist und konfiguriert ist, um die bewegliche Kupplung (82) nach hinten zu drücken, während sie sich nach hinten durch einen pneumatischen Druck bewegt, der auf eine Innenseite der Kolbenaufnahmenut (71c) ausgeübt wird, eine Kupplungsfeder (85), die konfiguriert ist, um eine elastische Kraft auf die bewegliche Kupplung (82) nach vorne anzuwenden, und ein Kolbenlager (84), das zwischen der beweglichen Kupplung (82) und dem Kolben (83) angeordnet ist, um die bewegliche Kupplung (82) in Bezug auf den Kolben (83) drehbar zu lagern.

4. Elektrisches Werkzeugmaschinenantriebssystem nach Anspruch 3, wobei die Spannfutterverriegelungseinheit umfasst
einen Fixierstift (61), der so installiert ist, dass er sich linear hin zu der Seite des Spannfutters (C) vor dem Gehäuse (10) hin und her bewegt, wobei ein distales Ende des Fixierstifts (61) in eine Verriegelungsnut (71b) eingeführt ist, die an einer Außenumfangsfläche des festen Elements (71) oder der Spannvorrichtung (C) ausgebildet ist, und
einen Stiftaktuator (62), der konfiguriert ist, um den Fixierstift (61) linear hin und her zu bewegen.

5. Elektrisches Antriebssystem für eine Werkzeugmaschine nach Anspruch 4, wobei ein pneumatischer Kanal (71d), der sich von der Kolbenaufnahmenut (71c) zu der Verriegelungsnut (71b) erstreckt, in dem festen Element (71) ausgebildet ist, einen Luftzufuhrkanal (61a), der mit dem pneumatischen Kanal (71d) in Verbindung steht, wenn der Fixierstift (61) in die Verriegelungsnut (71b) eingesetzt ist, in dem Fixierstift (61) ausgebildet ist, und der Luftzufuhrkanal (61a) mit einer externen Luftzufuhreinheit verbunden ist, um dem pneumatischen Kanal (71d) Luft zuzuführen.

6. Elektrisches Antriebssystem für eine Werkzeugmaschine nach Anspruch 4, wobei ein Schmiermittelkanal (71e), der konfiguriert ist, um mit der Verriegelungsnut (71b) zu kommunizieren, in dem festen Element (71) ausgebildet ist, ein Schmiermittelzufuhrkanal (61b), der mit dem Schmiermittelkanal (71e) in Verbindung steht, wenn der Fixierstift (61) in die Verriegelungsnut (71b) eingesetzt ist, in dem Fixierstift (61) ausgebildet ist, und der Schmiermittelzufuhrkanal (61b) mit einer externen Schmiermittelzufuhreinheit verbunden ist, um dem Schmiermittelkanal (71e) ein Schmiermittel zuzuführen.

7. Elektrisches Antriebssystem für eine Werkzeugmaschine nach Anspruch 1, wobei die Codiereinheit umfasst
eine erste Encoder-Riemenscheibe (51), die in einem hinteren Abschnitt der Antriebsriemenscheibe (30) installiert ist,
eine zweite Encoder-Riemenscheibe (52), die drehbar in dem Gehäuse (10) installiert ist,
einen Codierleistungsübertragungsriemen (53), der installiert ist, um die erste Encoder-Riemenscheibe (51) und die zweite Encoder-Riemenscheibe (52) gewickelt zu werden, um eine Drehkraft der ersten Encoder-Riemenscheibe (51) auf die zweite Encoder-Riemenscheibe (52) zu übertragen, und
einen Codierer (54), der axial mit einem Mittelabschnitt der zweiten Encoder-Riemenscheibe (52) gekoppelt ist, um eine Drehposition zu erfassen und konfiguriert ist, um ein erfasstes Positionssignal an eine Steuerung zu übertragen, die eine Drehung des Spindelmotors steuert.

## Revendications

1. Système d'entraînement électrique de machine-outil comprenant :
un boîtier (10) ;
un axe tubulaire creux (20) s'étendant dans une direction avant-arrière dans le boîtier (10) et installé de manière rotative par rapport au boîtier (10) ;
une poulie d'entraînement (30) installée de manière fixe sur l'axe (20), sur l'extérieur d'une partie arrière de l'axe (20) ;
un moteur à axe conçu pour faire tourner la poulie d'entraînement (30) ;
un mandrin (C) installé dans une partie terminale avant de l'axe (20) et comprenant une mâchoire (J) serrant une pièce à usiner ;
une barre de traction (40) installée pour être déplaçable linéairement à l'intérieur de l'axe (20) dans une direction avant-arrière de telle façon qu'une partie d'extrémité avant est reliée au mandrin (C) pour être déplaçable linéairement par rapport au mandrin (C) mais sans faculté de rotation par rapport au mandrin (C) dans la direction avant-arrière ;
une unité de conversion de mouvement conçue pour recevoir une force de rotation de la poulie d'entraînement (30) et convertir la force de rotation en un mouvement avant-arrière de la barre de traction (40) ;
une unité de verrouillage de mandrin conçue pour empêcher ou permettre un mouvement de rotation du mandrin (C) par rapport au boîtier (10) ;
une unité d'embrayage installée pour être déplaçable vers l'avant ou vers l'arrière entre une partie avant de l'axe (20) et une partie arrière du mandrin (C) et reliant l'axe (20) au mandrin (C) ou séparant l'axe (20) du mandrin (C) afin que l'axe (20) puisse tourner par rapport au mandrin (C) ; et
un codeur rotatif conçu pour détecter une position en rotation de la poulie d'entraînement (30)
**caractérisé en ce que**
l'unité de conversion de mouvement comprend :
une broche filetée (41) ayant une surface extérieure sur laquelle est formé un filetage hélicoïdal, et formée pour être fixée à la barre de traction (40),
un élément porteur (95) ayant une surface périphérique intérieure sur laquelle est formé un filetage (95a) couplé de manière hélicoïdale au filetage de la broche filetée (41), et couplé à l'extérieur de la broche filetée (41), et
une unité de transmission de force de rotation conçue pour transmettre une force de rotation de la poulie d'entraînement (30) à l'élément porteur (95), ladite unité de transmission de force de rotation comprenant un élément d'entraînement annulaire (92) relié de manière fixe à la poulie d'entraînement (30) et une pluralité de goupilles d'entraînement (93) installées dans l'élément d'entraînement (92) pour faire saillie radialement vers l'intérieur afin de transmettre une force de rotation à l'élément porteur (95), et une rainure de jeu en forme de trou oblong dans laquelle une extrémité distale de la goupille d'entraînement (93) est insérée pour se déplacer d'une certaine distance dans une direction circonférentielle étant formée sur une surface extérieure de l'élément porteur (95).

2. Système d'entraînement électrique de machine-outil selon la revendication 1, dans laquelle l'unité d'embrayage comprend
un élément fixe (71) fixé à la surface arrière du mandrin (C),
un élément rotatif (72) fixé sur la partie terminale avant de l'axe (20) et relié de manière rotative à l'élément fixe (71),
un embrayage fixe fixé à une partie arrière de l'élément fixe (71) et ayant une denture avant (81a) formée le long d'une direction circonférentielle,
un embrayage mobile (82) installé pour être mobile dans une direction avant-arrière devant l'élément rotatif (72) et ayant une denture arrière (82a) empêchant une rotation relative de l'élément rotatif (72) par rapport à l'élément fixe (71) lors d'une mise en prise avec la denture avant (81a) et formée le long de la direction circonférentielle, et
un élément d'activation d'embrayage conçu pour déplacer l'embrayage mobile (82) dans la direction avant-arrière.

3. Système d'entraînement électrique de machine-outil selon la revendication 2, dans lequel l'élément d'activation d'embrayage comprend un piston (83) installé à l'intérieur d'une rainure de réception de piston (71c) formée dans l'élément fixe (71) et conçu pour pousser l'embrayage mobile (82) vers l'arrière lors d'un déplacement vers l'arrière sous l'effet d'une pression pneumatique appliquée sur l'intérieur de la rainure de réception de piston (71c), un ressort d'embrayage (85) conçu pour appliquer une force élastique sur l'embrayage mobile (82) vers l'avant, et un palier de piston (84) disposé entre l'embrayage mobile (82) et le piston (83) pour supporter de manière rotative l'embrayage mobile (82) par rapport au piston (83).

4. Système d'entraînement électrique de machine-outil selon la revendication 3, dans lequel l'unité de verrouillage de mandrin comprend
une goupille de fixation (61) installée pour effectuer un mouvement linéaire de va-et-vient vers le côté mandrin (C) devant le boîtier (10), une extrémité distale de la goupille de fixation (61) étant insérée dans une rainure de verrouillage (71b) formée sur une surface périphérique extérieure de l'élément fixe (71) ou du mandrin (C), et
un actionneur de goupille (62) conçu pour déplacer linéairement la goupille de fixation (61) dans un mouvement de va-et-vient.

5. Système d'entraînement électrique de machine-outil selon la revendication 4, dans lequel un canal pneumatique (71d) s'étendant depuis la rainure de réception de piston (71c) jusqu'à la rainure de verrouillage (71b) est formé dans l'élément fixe (71), un canal d'alimentation en air (61a) qui communique avec le canal pneumatique (71d) lorsque la goupille de fixation (61) est insérée dans la rainure de verrouillage (71b) est formé dans la goupille de fixation (61), et le canal d'alimentation en air (61a) est connecté à une unité d'alimentation en air externe pour alimenter le canal pneumatique (71d) d'air.

6. Système d'entraînement électrique de la machine-outil selon la revendication 4, dans lequel un canal de lubrifiant (71e) conçu pour communiquer avec la rainure de verrouillage (71b) est formé dans l'élément fixe (71), un canal d'alimentation en lubrifiant (61b) qui communique avec le canal de lubrifiant (71e) lorsque la goupille de fixation (61) est insérée dans la rainure de verrouillage (71b) est formé dans la goupille de fixation (61), et le canal d'alimentation en lubrifiant (61b) est relié à une unité d'alimentation en lubrifiant externe destinée à fournir un lubrifiant au canal de lubrifiant (71e).

7. Système d'entraînement électrique de machine-outil selon la revendication 1, dans lequel le codeur rotatif comprend
une première poulie de codage (51) installée dans une partie arrière de la poulie d'entraînement (30),
une deuxième poulie de codage (52) installée de manière rotative dans le boîtier (10),
une courroie de transmission de puissance de codage (53) installée pour être enroulée autour de la première poulie de codage (51) et de la deuxième poulie de codage (52) afin de transmettre une force de rotation de la première poulie de codage (51) à la deuxième poulie de codage (52), et
un codeur (54) couplé axialement à une partie centrale de la deuxième poulie de codage (52) pour détecter une position en rotation et conçu pour transmettre un signal de position détectée à un contrôleur qui commande la rotation du moteur à axe.
